# EUROPÄISCHE PATENTSCHRIFT

(11) **EP 0 847 537 B1**
(45) Veröffentlichungstag und Bekanntmachung des Hinweises auf die Patenterteilung: **21.04.1999**
(21) Anmeldenummer: 96930990.5
(22) Anmeldetag: 31.08.1996
(51) Int. Cl.: G01S 5/14

(54) **SYSTEM ZUR LAGEBESTIMMUNG VON BEWEGLICHEN OBJEKTEN**
SYSTEM FOR DETERMINING THE LOCATION OF MOBILE OBJECTS
DISPOSITIF POUR LOCALISER DES OBJETS MOBILES

(30) Priorität: 01.09.1995 DE 19532362; 19.10.1995 DE 19538876
(43) Veröffentlichungstag der Anmeldung: 17.06.1998
(73) Patentinhaber: KONLE, Tilmar, 81247 München (DE)
(72) Erfinder: ENGELMAYER, Wolfgang, D-53604 Bad Honnef (DE); LINDSTROET, Walter, D-53343 Wachtberg (DE); RAVEN, Paul, D-53501 Graftschaft (DE); SANDMANN, Stefan, D-53123 Bonn (DE); SCHOEMAKERS, Günter, D-50767 Köln (DE)
(86) Internationale Anmeldenummer: EP9603828
(87) Internationale Veröffentlichungsnummer: WO9709635

(56) Entgegenhaltungen:
- EP-A- 0 574 009
- GB-A- 2 287 149
- US-A- 5 422 813
- US-A- 5 477 228

## Beschreibung

Die Erfindung bezieht sich auf ein System gemäß dem Oberbegriff des Patentanspruchs 1 sowie auf eine Empfangseinrichtung gemäß dem Oberbegriff des Patentanspruchs 6. Ein System und eine Empfangseinrichtung dieser Art sind aus der DE 41 36 136 C1 bekannt.

Zur Ortung und Navigation von bewegten Objekten ist ein unter der Bezeichnung "Global-Positioning-System (GPS-System)" eingeführtes, satellitengestütztes Verfahren bekannt, bei welchem sogenannte GPS-Satelliten beispielsweise auf der Frequenz 1,575 GHz neben ihren Bahndaten die Uhrzeit mit hoher Präzision aussenden. Die Bahn der GPS-Satelliten verläuft so, daß sich ihre Lage gegenüber einem stationären Erdpunkt fortlaufend verändert. Ein GPS-Empfänger rechnet die Entfernung zu den einzelnen GPS-Satelliten aus, in dem er die Zeit mißt, die das Signal vom Satelliten zum Empfänger benötigt. Da die Positionen der GPS-Satelliten bekannt sind, können mit vier GPS-Satelliten die Raumkoordinaten des Empfängerstandortes auf der Erde sowie der Fehler der internen Uhr des GPS-Empfängers errechnet werden. Damit läßt sich jedoch nur eine Genauigkeit von ca. ± 100 Meter erreichen. Da diese Genauigkeit für viele Anwendungen nicht ausreicht, ist es bekannt (RTCM Recommended Standards for Differential GPS Service", Version 2.1, Chapter 4, vom 3. Januar 1994, herausgegeben von Radio Technical Commission for Maritime Services, 655 Fifteenth Street, NW, Suite 300, Washington, D.C. 20005 U.S.A.), von einem Referenz-GPS-Empfänger, dessen Standortkoordinaten genau bekannt sind, Fehlerwerte zu ermitteln und in Form von Korrekturdaten zu übertragen. Mit Hilfe der empfangenen Korrekturdaten werden die von einem mobilen GPS-Empfänger ermittelten GPS-Meßdaten korrigiert. Das in dem RTCM-Standard festgelegte Datenformat der Korrekturdaten ergibt sich aus der vorgenannten Literaturstelle, Seiten 4-3 und 4-8, wie folgt:

Für jeden einzelnen GPS-Satelliten gibt es eine gesonderte "Botschaft" ("Message"), bestehend aus einem Skalenfaktor (Scale Factor), einer Angabe über den Fehlerbereich (UDRE = User Differential Range Error), einer Kennung des betreffenden Satelliten (Satellite ID), sogenannten Pseudo-Streckenkorrekturwerten (PRC = Pseudo Range Correction), einem Prüfsignal (Parity), Werten für die voraussichtliche Änderungsgeschwindigkeit der PRC-Daten (RRC = Rate-Range Correction), und einer Angabe, auf welche Bahndaten sich die Korrekturwerte beziehen (Issue of Data). Die einzelnen "Botschaften" werden zu einer Schlange unmittelbar aneinandergefügt, wobei die Schlange ohne Rücksicht auf die Naht-stellen der einzelnen "Botschaften" auf eine Folge von 30 Bit langen Worten aufgeteilt wird. Vor jeder Schlange von "Botschaften" wird ein aus zwei 30 Bit langen Worten bestehender Header vorangestellt, um den Beginn jeder Schlange zu markieren. Das erste 30-Bit-Wort des Headers besteht aus einer Einlaufsequenz (Preamble), gefolgt von einer Kennung des Typs der nachfolgenden Botschaften (Message Type), einer Kennung der Sendestation (Station ID) und einem Prüfwort (Parity). Das zweite 30-Bit-Wort des Headers besteht aus einer Zeitinformation (modified Z-Count), einer Sequenznummer (Sequence Number), einer Angabe über die Gesamtlänge der nachfolgenden "Botschaften" (Length of Frame), einer Angabe über den Zustand der Sendestation (Station Health) und einem Prüfwort (Parity).

Zur Echtzeitübertragung der Korrekturdaten ist es aus der DE 41 36 136 Cl bekannt, das vorhandene Sendernetz der Rundfunkanstalten zu benutzen, wobei die Korrekturdaten in freie Gruppen zu je 37 Bit des zyklisch übertragenen Radio-Daten-(RDS)-Signals eingefügt werden, welche innerhalb der Rundfunkprogrammsignale unhörbar übertragen werden. Da das Datenformat des Radio-Daten-Systems mit dem vorgehend beschriebenen Datenformat der GPS-Korrekturdaten nicht zusammenpaßt, werden der Header und die nachfolgenden "Botschaften" jeder Schlange in Bruchstücke von jeweils 37 Bit zerteilt, die den freien RDS-Gruppen in aufeinanderfolgenden RDS-Signalzyklen zugeteilt werden. Der bruchstückweise Inhalt einer solchen RDS-Gruppe ist völlig zufällig und als solcher nicht identifizierbar. Nur wenn alle RDS-Gruppen, auf welche der Header und die nachfolgenden "Botschaften" jeder Schlange aufgeteilt wurden, nacheinander störungsfrei empfangen werden, läßt sich das Datenformat der GPS-Korrekturdaten aus den Bruchstücken wieder zusammensetzen und auswerten. Bei Ausfall nur einer einzigen RDS-Gruppe, beispielsweise bei einer UKW- Empfangsstörung, geht die Information der gesamten Schlange verloren, was den Verlust der Korrekturwerte aller zur Schlange gehörigen "Botschaften", d.h., für alle zugehörigen GPS-Satelliten bedeutet. Hinzu kommt, daß die Dauer der Übertragung von Korrektur-"Botschaften" für alle GPS-Satelliten, d.h. einer Schlange, wegen der begrenzten Kapazität des RDS-Systems selbst bei Belegung von drei RDS-Gruppen pro RDS-Zyklus (Zyklusdauer 1 Sekunde) mehrere Sekunden beträgt, wodurch die für alle GPS-Satelliten gleichzeitig errechneten Korrekturwerte mit fortschreitender Dauer der Übertragung einer Schlange mehr und mehr an Aktualität verlieren. Dieses Alterungsproblem verschärft sich in dem Maße, wie im RDS-System immer weniger freie Kapazität für die Übertragung der Korrekturwerte zur Verfügung steht, weil beispielsweise andere Dienste gebenfalls Kapazität im RDS-System benötigen.

Die Aufgabe der Erfindung besteht demgegenüber darin, ein System der eingangs erwähnten Art dahingehend zu verbessern, daß der Bedarf an Übertragungskapazität verringert, die Auswertbarkeit der Korrekturdaten im Falle von Übertragungsstörungen wesentlich verbessert sowie die Aktualität der übertragenen Korrekturdaten gesteigert wird. Ferner soll eine Empfangseinrichtung geschaffen werden, welche diese Ziele auf der Empfängerseite realisiert.

Diese Aufgabe wird erfindungsgemäß durch die Merkmale der nebengeordneten Patentansprüche 1 und 6 gelöst.

Vorteilhafte Ausgestaltungen und Weiterbildungen des erfindungsgemäßen Systems und der erfindungsgemäßen Empfangseinrichtung ergeben sich aus den Unteransprüchen 2 bis 5 beziehungsweise 7 und 8.

Die Erfindung wird anhand der Zeichnungen beispielhaft erläutert. Es zeigt:
- Fig. 1: eine schematische Darstellung eines bekannten Lagebestimungssystems entsprechend dem sog. "Differential GPS";
- Fig. 2: ein Blockschaltbild der senderförmigen Teile des erfindungsgemäßen Systems;
- Fig. 3: ein Blockschaltbild der empfängerseitigen Teile des erfindungsgemäßen Systems;
- Fig. 4: ein Schema für das Datenformat eines laufend übertragenen RDS-Signalzyklus' mit den vollständigen Korrekturdaten für einen GPS-Satelliten;
- Fig. 5: ein Schema für das Datenformat eines gelegentlich übertragenen RDS-Signalzyklus' mit einer aus den empfangenen GPS-Signalen abgeleiteten Zeitinformation (modified Z-Count), und

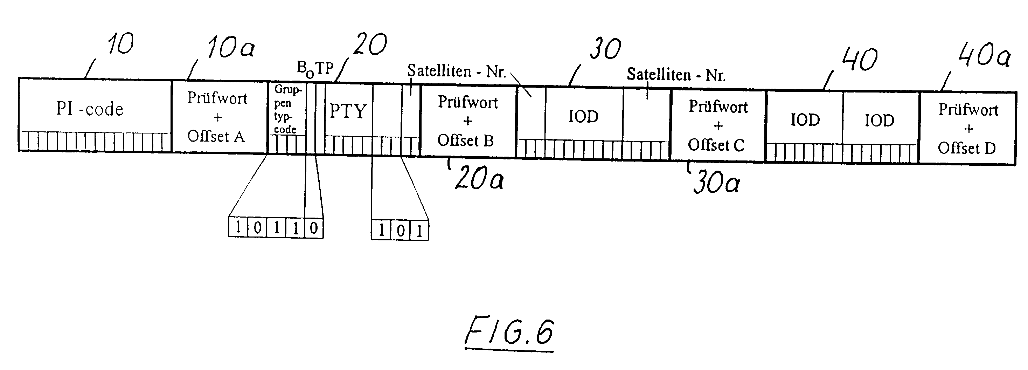

- Fig. 6: ein Schema für das Datenformat eines RDS-Signalzyklus' mit einer aus den empfangenen GPS-Signalen abgeleiteten Datenidentifizierungsinformation (IOD).

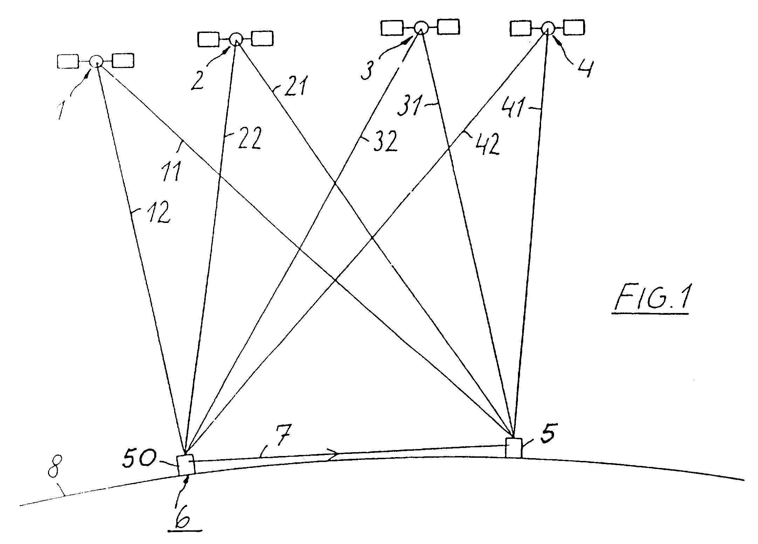

Wie aus Fig. 1 hervorgeht, stützt sich das dort dargestellte Lagebestimmungssystem auf sog. GPS-Satelliten 1 bis 4, welche die Erde so umkreisen, daß sich ihre Lage gegenüber einem stationären Erdpunkt fortlaufend verändert. Die dargestellte Anzahl von vier GPS-Satelliten stellt nur die Mindestanzahl dar; in Wirklichkeit existiert eine viel höhere Anzahl von GPS-Satelliten, welche in einem dichten Netz um die Erde kreisen.

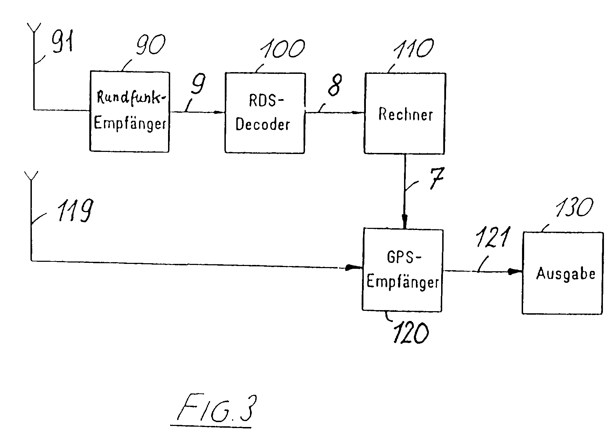

Ein in einem beweglichen Objekt 5 auf der Erdoberfläche 8 eingebauter GPS-Empfänger 120 (Fig. 3) kann aufgrund der empfangenen GPS-Signale 11, 21, 31 und 41 seine Raumkoordinaten bestimmen, jedoch nur mit einer Genauigkeit von etwa ± 100 Metern aufgrund von Fehlerquellen, welche teils systembedingt sind und teils auf atmosphärischen Störungen beruhen. Um die Meßgenauigkeit zu erhöhen, ist bei dem sog. "Differential GPS" am Standort 6 eine ortsfest instal lierte Referenz-GPS-Empfangs- und Verarbeitungseinheit 50 vorhanden, deren Lagekoordinaten genau bekannt sind. Aus den von ihr empfangenen GPS-Signalen 12, 22, 32 und 42 sowie den bekannten Lagekoordinaten ermittelt die Referenz-GPS-Empfangs- und Verarbeitungseinheit 50 fortlaufende Fehlerwerte, aus denen Korrekturdaten 7 in standardisiertem Dadenformat gebildet werden, die an den GPS-Empfänger 120 am beweglichen Objekt 5 in Echtzeit übertragen werden. Die Einheit 50 besteht beispielsweise aus einem oder mehreren GPS-Empfängern sowie aus einem nachgeschalteten Rechner. Die auf diesem Rechner vorhandene Referenzstationssoftware kann unter anderem auch die Korrekturdaten 7 liefern. Alternativ kann die Einheit 50 auch aus einem einzigen GPS-Empfänger bestehen, in welchem die Bildung der Korrekturdaten 7 durch integrierte Bausteine erfolgt. Anhand der vom mobilen GPS-Empfänger 120 empfangenen Korrekturdaten 7 lassen sich die gemessenen, momentanen Lagekoordinaten bis auf eine Genauigkeit von bis zu ± 1 Meter korrigieren. Diese Werte gelten nur innerhalb eines gewissen Umkreises um die Referenz-GPS-Empfangs- und Verarbeitungseinheit 50.

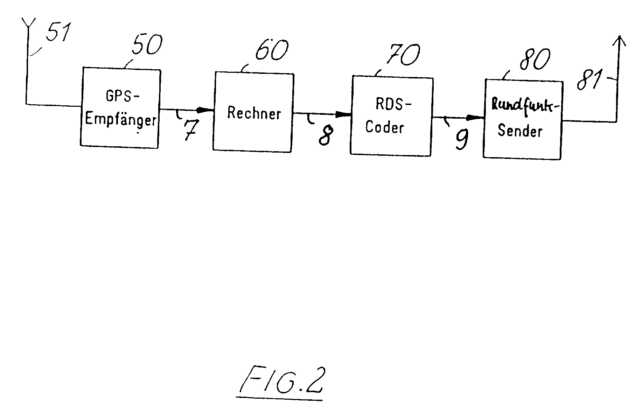

Um eine flächendeckende Übertragung der Korrekturdaten 7 zu gewährleisten, ist bei dem erfindungsgemäßen System vorgesehen, daß die Korrekturdaten 7 innerhalb von Rundfunk-Programmsignalen übertragen werden. Hierzu werden, wie aus Fig. 2 ersichtlich ist, aus den von der Referenz-GPS-Empfangs- und Verarbeitungseinheit 50 über eine Satelliten-Empfangsantenne 51 empfangenen GPS-Signale 12 bis 42 Koordinaten ermittelt (Meßwerte), die aber infolge verschiedener Einflüsse verfälscht sind. Durch Vergleich mit den genau bekannten Standortkoordinaten der Empfangsantenne 51 bildet die Referenz-GPS-Empfangs- und Verarbeitungseinheit 50 standardisierte Korrekturdaten 7. Diese Korrekturdaten 7 werden von einem nachgeschalteten Rechner 60 aufbereitet und dem RDS-Coder 70 eines Rundfunksenders 80 (FM- oder AM-Sender) zugeführt. Der RDS-Coder 70 fügt die aufbereiteten Korrekturdaten 8 in den RDS-Datenstrom in der nachstehend noch näher beschriebenen Weise formatgetreu ein. Das auf diese Weise ergänzte RDS-Signal 9 wird von dem Rundfunksender 80 innerhalb des Rundfunk-Programmsignals über dessen Sendemast 81 flächendekkend ausgestrahlt.

Ein an dem beweglichen Objekt 5 vorhandener Rundfunkempfänger 90 (Fig. 3) ist auf die Trägerfrequenz des Rundfunksenders 80 abgestimmt und empfängt über seine Empfangsantenne 91 zusammen mit dem Rundfunkprogrammsignal des Rundfunksenders 80 das um die autbereiteten Korrekturdaten 8 ergänzte RDS-Signal 9. In einem nachgeschaltetem RDS-Decoder 100 wird das RDS-Signal 9 aus dem Rundfunkprogrammsignal abgetrennt, decodiert und einem Rechner 110 zugeführt, welcher die aufbereiteten Korrekturdaten 8 von dem RDS-Signal abtrennt und hieraus standardisierte Korrekturdaten 7 rekonstruiert. Die rekonstruierten, standardisierten Korrekturdaten 7 werden vom Rechner 110 dem GPS-Empfänger 120 des beweglichen Objektes 5 zugeführt, welcher über eine Satelliten-Empfangsantenne 119 die GPS-Signale 11 bis 41 empfängt und hieraus Koordinatenmeßwerte ableitet. Die abgeleiteten Koordinatenmeßwerte werden innerhalb des GPS-Einpfängers 120 mit Hilfe der rekonstruierten Korrekturdaten 7 korrigiert. Die korrigierten Koordinatenwerte 121 werden von dem GPS-Empfänger 120 einer Ausgabeeinrichtung 130 zugeführt.

Die in der Referenz-GPS-Empfangs- und Verarbeitungseinheit gebildeten Korrekturdaten 7 umfassen entsprechend dem eingangs erläuterten Standard - getrennt für jeden GPS-Satelliten 1, 2, 3, 4 - Pseudo-Streckenkorrekturwerte (im folgenden PRC-Daten genannt), welche für den Zeitpunkt ihrer Berechnung gültig sind. Ferner umfassen die in der Referenz-GPS-Empfangs- und Verarbeitungseinheit gebildeten Korrekturdaten Werte für die Änderungsgeschwindigkeit der PRC-Daten. Diese Änderungsgeschwindigkeitswerte werden im folgenden als RRC-Daten bezeichnet. Aus den PRC- und RRC-Daten kann zu einem aktuellen Zeitpunkt, der später als der Zeitpunkt der Berechnung der PRC-Daten liegt, auf den aktuellen PRC-Wert geschlossen werden, wobei die Genauigkeit des angenommenen aktuellen PRC-Wertes davon abhängig ist, wie genau die als RRC-Daten erfaßte frühere Änderungsgeschwindigkeit mit der aktuellen Änderungsgeschwindigkeit übereinstimmt.

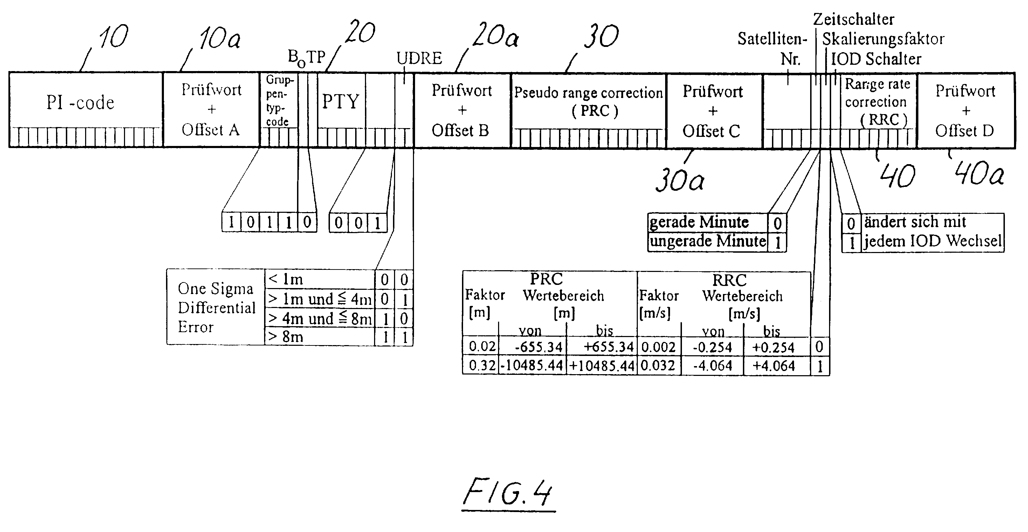

Für die Übertragung der Korrekturdaten 7 wird erfindungsgemäß das Radio-Daten-System (RDS) für FM- oder AM-Rundfunk benutzt, bei welchem ein RDS-Datenstrom auf einen Hilfsträger von z.B. 57 kHz aufmoduliert ist, der in das Basisband des Programmsignals eines FM- oder AM-Rundfunksenders unhörbar eingefügt ist. Das Datenformat des RDS-Datenstroms besteht aus zyklisch übertragenen Folgen von Datenblöcken, wobei ein RDS-Zyklus, wie aus Fig. 4 hervorgeht, längere Datenblöcke 10, 20, 30 und 40 umfaßt, welche jeweils durch ein kürzeres Prüfwort 10a, 20a, 30a, 40a voneinanderander getrennt sind. Jeweils vier Datenblöcke 10, 20, 30, 40 bilden eine RDS-Gruppe mit einer freien Datenkapazität von 37 Bit. Im betrachteten Beispielsfall von Fig. 4 sind in den längeren Datenblöcken 10 und 20 der Programm-ldentifikations-Code Pl und der Programm-Typ-Code PTY gemäß dem Europäischen RDS-Standard (CENELEC) EN 50067 enthalten. Die freie Datenkapazität der RDS-Gruppe wird zur Aufnahme der Korrekturdaten für einen GPS-Satelliten genutzt, wobei die PRC-Daten in den Block 30 eingefügt sind und die RRC-Daten zusammen mit der Kennung ("Satelliten-Nr.") des betreffenden GPS-Satelliten, einem Zeit-Flag ("Zeitschalter"), dem Skalenfaktor und einem IOD-Flag ("IOD-Schalter") im Block 40 eingefügt sind.

Um die Datenmenge der PRC- und RRC-Daten für jeden Satelliten auf die Datenkapazität einer Gruppe des RDS-Signalzyklus', d.h. auf 37 Bit, zu reduzieren, werden von dem standardisierten Datenformat der GPS-Korrekturwerte (vgl. den in der Einleitung erörterten Standard für Differential-GPS-Service) der Header sowie die Prüfworte (Parity) nicht übertragen. Auf die Prüfworte (Parity) des RTCM-Standards kann ohne weiteres verzichtet werden, da das RDS-Daten-format bereits in den kürzeren Datenblöcken zwischen jeweils zwei längeren Datenblöcken formateigene Prüfworte enthält. Der Verzicht auf den Header bedeutet indessen den Verzicht auf die ständige Übertragung der Information (modified Z-Count) über den Zeitpunkt der Berechnung der Korrekturwerte für sämtliche GPS-Satelliten. Um trotz dieses Verzichts die Korrekturwerte zeitlich zuordnen zu können, werden erfindungsgemäß in dem Rechner 60 (Fig. 2) die PRC-Daten mit Hilfe der RRC-Daten auf die jeweils zurückliegende volle Minute zurückgerechnet. Dies soll an folgendem Beispiel erläutert werden:
Zum Zeitpunkt 12:01:11 hat der Z-Count den Wert 71 (60 Sekunden plus 11 Sekunden nach dem Zeitpunkt 12:00:00). Der PRC-Wert sei + 10,32m der RRC-Wert sei +0,98 m/s.
Die Rückrechnung auf den Zeitpunkt 12:01:00 (Z-Count mit Wert 60) ergibt bei der Änderungsgeschwindigkeit (RRC-Wert) von +0,98 m/s einen PRC-Wert von -0,46 m (+10,32m minus 0,98m/s x 11s).

Die zurückgerechneten PRC-Daten werden zusammen mit den RRC-Daten als bearbeitete Korrekturdaten 8 übertragen. Von dem empfangsseitigen Rechner 110 werden die zurückgerechneten PRC-Daten mit Hilfe der zugehörigen RRC-Daten und eines rechnerinternen Z-Counts wieder auf den momentan aktuellen Wert hochgerechnet. Dies soll an folgendem Beispiel erläutert werden:
Die Hochrechnung auf den Zeitpunkt 12:01:12 (Z-Count mit Wert 72) ergibt bei der Änderungsgeschwindigkeit (RRC-Wert) von +0,98 m/s einen PRC-Wert von +11,30 m (-0,46m plus 0.98m/s x 12s).

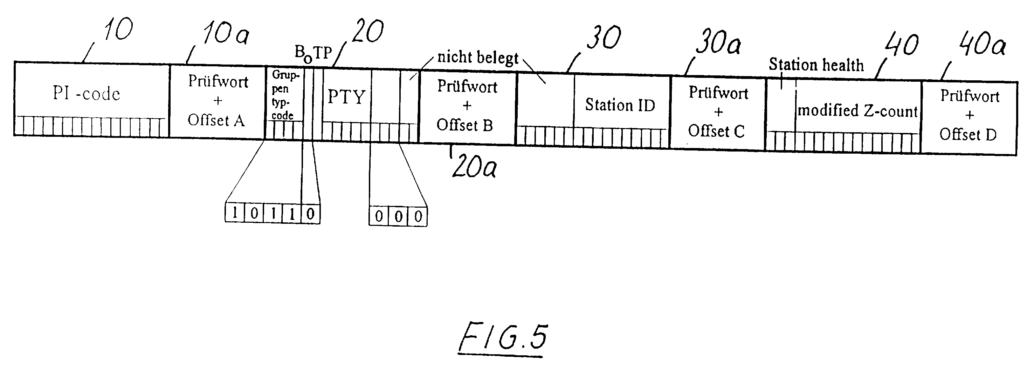

Damit der Rechner 110 stets zweifelsfrei erkennt, für welche volle Minute die empfangenen, zurückgerechneten PRC-Werte gelten, wird das bereits erwähnte Zeit-Flag (0 = gerade Minute; 1 = ungerade Minute) im Block 40 mitübertragen. Ferner wird der rechnerinterme Z-Count von Zeit zu Zeit, beispielsweise 1- bis 2-mal pro Minute, durch eine Zeitinformation (modified Z-Count) synchronisiert, welche gemäß Fig. 5 zusammen mit der Senderkennung (Station ID) in den Blöcken 30 und 40 anstelle der Belegung gemäß Fig. 4 gelegentlich ausgestrahlt wird. Des weiteren wird gelegentlich in den Blöcken 30 und 40 die Kennung IOD (Identification of Data) ausgestrahlt, um dem Rechner 110 in unterschiedlicher Häufigkeit alle Daten und Kennungen zu übermitteln. welche er benötigt, um wieder ein standardisiertes RTCM-Korrektursignal aus den im RDS-Datenstrom ankommenden Teilinformationen zusammensetzen zu können. Die Parity-Prüfworte des normgerechten RTCM-Korrektursignals leitet der Rechner 110 entsprechend der ihm bekannten Paritäts-Regel aus den empfangenen Teilinformation ohne weiteres ab und fügt es normgerecht ein.

Durch die Reduzierung der Korrekturdaten pro Satellit auf 37 Bit ist es nicht nur möglich, in einer einzigen RDS-Gruppe (37 Bit Kapazität) sämtliche Korrekturdaten eines Satelliten zu übertragen, was bei neun Satelliten ein Reduzierung von ursprünglich 680 Bit auf 333 Bit (9x37 Bit) bedeutet, sondern es wird eine eindeutige, reproduzierbare Zuordnung des RDS-Datenformates zu dem RTCM-Datenformat erzielt. Der Verlust einer RDS-Gruppe im Falle einer Übertragungsstörung bedeutet daher nicht mehr, wie beim Stand der Technik, den Verlust der Korrekturdaten für sämtliche neun Satelliten, sondern nur noch den Verlust der Korrekturdaten für den einen, der gestörten RDS-Gruppe zugeordneten Satelliten.

Auf diese Weise läßt sich mit dem erfindungsgemäßen System eine wesentlich verbesserte Störsicherheit der Übertragung erzielen.

Zur Verbesserung der Aktualität der übertragenen Korrekturdaten werden nach jeder Einfügung von PRC- und RRC-Daten in eine RDS-Gruppe die den restlichen Satelliten zugeordneten PRC- und RRC-Daten im Rechner 110 aktualisiert. Auf diese Weise läßt sich das Durchschnittsalter der Korrekturdaten um mehr als die Hälfte gegenüber dem Stand der Technik verringern, bei welchem die Korrektordaten für sämtliche Satelliten zu einem gemeinsamen Zeitpunkt errechnet und wegen der bruchstückweisen Einfügung in den RDS-Datenstrom ohne Aktualisierungsmöglichkeit übertragen werden müssen.

Eine weitere Möglichkeit zur Verbesserung der Datenaktualität besteht darin, diejenigen PRC-Daten, deren Änderungsgeschwindigkeit (RRC) gleich oder nahezu gleich geblieben ist, mit geringerer Priorität in den RDS-Datenstrom einzufügen als PRC-Daten, deren Änderungsgeschwindigkeit (RRC) sich stärker verändert. Eine solche schnellere Erneuerung eines schlechter prognostizierten RRC-Wertes durch einen aktuelleren RRC-Wert erhöht weiter die Genauigkeit der Lagekorrektur. Zur Durchführung einer solchen Prioritätssteuerung bei der Satellitenauswahl werden für jeden Satelliten mindestens zwei Prognosen im Zeitraum von beispielsweise 20 Sekunden berechnet. Die eine Prognose basiert auf den aktuellen PRC- und RRC-Werten, eine andere Prognose auf den vorher verschickten PRC- und RRC-Werten. Die Abweichung innerhalb mehrerer Prognosen stellt einen Fehler dar, der für die einzelnen Satelliten unterschiedlich groß sein kann, so daß die Größe dieses Fehlers als Knterium für die Prioritätsentscheidung dient.

## Patentansprüche

1. System zur Lagebestimmung von beweglichen Objekten (5) mit Hilfe von Ortungs- und Navigationssatelliten (GPS-Satelliten 1, 2, 3, 4), die ihre Lage gegenüber einem stationären Erdpunkt fortlaufend verändern und GPS-Signale (11, 21, 31, 41) aussenden, welche es einem an dem beweglichen Objekt (5) installierten GPS-Empfänger (120) ermöglichen, seine momentanen Lagekoordinaten zu bestimmen, mit
- wenigstens einer als Referenz arbeitenden GPS-Empfangs -und Verarbeitungseinheit (50), deren genaue Lagekoordinaten bekannt sind, welche aus den fortlaufend empfangenen GPS-Signalen (12, 22, 32, 42) und den bekannten Lagekoordinaten ihres Standortes (6) fortlaufende Fehlerwerte ermittelt und hieraus Korrekturdaten (7) bildet, wobei die Korrekturdaten (7)
- Pseudo-Streckenkorrekturwerte (PRC-Daten), welche für den Zeitpunkt ihrer Berechnung gültig sind, sowie
- Werte (RRC-Daten) für die momentane Änderungsgeschwindigkeit der PRC-Daten
umfassen;
- wenigstens einem Rundfunksender (80) mit RDS-Coder (70), welcher die gebildeten Korrekturdaten (7) als Daten eines in sein Programmsignal eingefügten Radio-Daten-System-Signals (RDS-Signals) aussendet;
- einem an dem beweglichen Objekt (5) vorhandenen Rundfunkempfänger (90) mit RDS-Decoder (100) zum Empfangen und Decodieren des mit den Korrekturdaten (7) versehenen RDS-Signals, und
- einem Rechner (110) zum Abtrennen der Korrekturdaten (7) aus dem decodierten RDS-Signal und zum Einspeisen der Korrekturdaten (7) in den am beweglichen Objekt (5) installierten GPS-Empfänger (120), welcher entsprechend den abgetrennten Korrekturwerten (7) seine Meßergebnisse korrigiert,
**dadurch gekennzeichnet,** daß
a) der GPS-Empfangs- und Verarbeitungseinheit (50) eine Auswerteeinrichtung (60) nachgeordnet ist, welche
- die zu einem bestimmten Zeitpunkt errechneten PRC-Daten mit Hilfe der zugehörigen Anderungsgeschwindigkeitswerte (RRC-Daten) auf den Zeitpunkt der letzten vollen Minute zurückrechnet und
- für jeden GPS-Satelliten die zurückgerechneten PRC-Daten zusammen mit den zugehörigen RRC-Daten und einer Kennung des betreffenden Satelliten, jedoch unter Verzicht auf einen in einem Standardformat für GPS-Korrektursignale vorgesehenen Header, in eine einzige RDS-Gruppe eines RDS-Signalzyklus' einfügt;
b) in einem dem RDS-Decoder (100) des Rundfunkempfängers (90) nachgeschalteten Rechner (110) die zurückgerechneten PRC-Daten für jeden GPS-Satelliten mit Hilfe der zugehörigen Änderungsgeschwindigkeitswerte (RRC-Daten) und rechnerintern generierter Zeitinformationen (interner Z-Count) auf die aktuelle Zeit hochgerechnet werden, und
c) in dem Rechner (110) der nicht-übertragene Header mit Prüfworten und fortlaufenden Zeitinformationen rekonstruiert und zusammen mit den hochgerechneten PRC-Daten für jeden GPS-Satelliten und den zugehörigen RRC-Daten zu dem standardisierten Format der Korrekturdaten (7) zusammengesetzt wird.

2. System nach Anspruch 1, **dadurch gekennzeichnet,** daß nach jeder Einfügung der bearbeiteten Korrekturdaten (8) für einen GPS-Satelliten in einen RDS-Signalzyklus die PRC- und RRC-Daten für alle Satelliten aktualisiert werden.

3. System nach Anspruch 1 oder 2, **dadurch gekennzeichnet,** daß die Auswerteeinrichtung (60) gelegentlich eine aus den empfangenen GPS-Signalen abgeleitete Zeitinformation in eine Gruppe eines RDS-Signalzyklus einfügt, welche von dem Rechner (110) zur Synchronisierung der intern generierten Zeitinformation (interner Z-Count) verwendet wird.

4. System nach einem der Ansprüch 1 bis 3, **dadurch gekennzeichnet,** daß die Auswerteeinrichtung (60) gelegentlich eine aus den empfangenen GPS-Signalen abgeleitete Datenidentifizierungsinformation (IOD) in eine Gruppe eines RDS-Signalzyklus einfügt. welche von dem Rechner (110) zur Rekonstruktion der standardisierten Korrekturdaten (7) verwendet wird.

5. System nach einem der Ansprüch 1 bis 4, **dadurch gekennzeichnet,** daß die Auswerteeinrichtung (60) für jeden GPS-Satelliten fortlaufend feststellt, wie genau die zuletzt als RRC-Daten übertragene Änderungsgeschwindigkeit mit dem aktuellen Änderungsgeschwindigkeitswert übereinstimmt, und daß die Auswerteeinrichtung (60) die Korrekturdaten für Satelliten mit schlechterer Übereinstimmung der aktuellen Änderungsgeschwindigkeit vorrangig gegenüber Korrekturdaten für Satelliten mit besserer Übereinstimmung der Änderungsgeschwindigkeit in den RDS-Signalzyklus im Sinne einer Prioritätssteuerung eingefügt.

6. Empfangseinrichtung zur Lagebestimmung von beweglichen Objekten (5) mit Hilfe von Ortungs- und Navigationssatelliten (GPS-Satelliten), die ihre Lage gegenüber einem stationären Erdpunkt fortlaufend verändern und GPS-Signale aussenden, welche es einem an dem beweglichen Objekt (5) installierten GPS-Empfänger (120) ermöglichen, seine momentanen Orts- und Höhenkoordinaten zu bestimmen, wobei die Empfangseinrichtung zum Empfang von Korrekturdaten, - bestehend aus Pseudo-Streckenkorrekturwerten (PRC-Daten), welche für den Zeitpunkt ihrer Berechnung gültig sind, sowie aus Werten (RRC-Daten) für die Änderungsgeschwindigkeit der PRC-Daten -, ausgebildet ist, wobei die Korrekturdaten als Daten eines in ein Rundfunk-Programmsignal eingefügten Radio-Daten-System-Signals (RDS-Signals) ausgesendet werden, mit
- einer Anordnung (90, 100) zum fortlaufenden Empfangen und Decodieren des mit den Korrekturdaten versehenen RDS-Signals, und
- einem Rechner (110) zum Abtrennen der Korrekturdaten aus dem decodierten RDS-Signal und zum Einspeisen der Korrekturdaten in den am beweglichen Objekt (5) installierten GPS-Empfänger (120), der entsprechend den abgetrennten Korrekturdaten seine Meßergebnisse korrigiert,
**dadurch gekennzeichnet,** daß zur Auswertung von bearbeiteten Korrekturdaten (8), bei denen die zu einem bestimmten Zeitpunkt errechneten PRC-Daten mit Hilfe der zugehörigen Änderungsgeschwindigkeitswerte (RRC-Daten) auf den Zeitpunkt der letzten vollen Minute zurückgerechnet sind, der Rechner (110) so ausgebildet ist, daß
a) die zurückgerechneten PRC-Daten für jeden GPS-Satelliten mit Hilfe der zugehörigen Änderungsgeschwindigkeitswerte (RRC-Daten) und rechnerintern generierter Zeitinformationen (interner Z-Count) auf die aktuelle Zeit hochgerechnet werden, und
b) ein nicht-übertragener, in einem standardisierten Format für Korrekturdaten vorgesehener Header mit Prüfworten und fortlaufenden Zeitinformationen rekonstruiert und zusammen mit den hochgerechneten PRC-Daten für jeden GPS-Satelliten und den zugehörigen RRC-Daten zu dem standardisierten Format der Korrekturdaten zusammengesetzt wird.

7. Empfangseinrichtung nach Anspruch 6, **dadurch gekennzeichnet,** daß eine gelegentlich in eine Gruppe eines RDS-Signalzyklus eingefügte, aus den empfangenen GPS-Signalen abgeleitete Zeitinformation von dem Rechner (110) zur Synchronisierung der intern generierten Zeitinformation (interner Z-Count) verwendet wird.

8. Empfangseinrichtung nach Anspruch 6 oder 7, **dadurch gekennzeichnet,** daß eine gelegentlich in eine Gruppe eines RDS-Signalzyklus eingefügte, aus den empfangenen GPS-Signalen abgeleitete Datenidentifizierungsinformation (IOD) von dem Rechner (110) zur Rekonstruktion der normgemäßen Korrekturdaten (7) verwendet wird.

## Claims

1. A system for determining the position of mobile objects (5) with the assistance of position-finding and navigation satellites (GPS satellites 1, 2, 3, 4) which continuously change their position relative to a stationary point on the earth and emit GPS signals (11, 21, 31, 41) that permit a GPS receiver (120) installed on the mobile object (5) to determine its instantaneous position coordinates, the system comprising
- at least one GPS receiving and processing unit (50) operating as a reference whose precise position coordinates are known, with the unit determining continuous error values from the continuously received GPS signals (12, 22, 32, 42) and from the known position coordinates of its location (6) and generating correction data (7) therefrom, with the correction data (7) comprising
- pseudo range correction values (PRC data) valid for the moment of their calculation, and
- values (RRC data) for the instantaneous rate of change of the RRC data;
- at least one radio station (80) with RDS coder (70) which emits the generated correction data (7) as data of a radio data system signal (RDS signal) which are inserted into its program signal;
- a radio receiver (90) present on the mobile object (5) and having an RDS decoder (100) for receiving and decoding the RDS signal that is provided with the correction data (7), and
- a computer (110) for separating the correction data (7) from the decoded RDS signal and for feeding the correction data (7) into the GPS receiver (120) mounted on the mobile object (5), with the receiver correcting its measurement results according to the separated correction values (7),
**characterized in that**
a) downstream of the GPS receiving and processing unit (50) an evaluating device (60) is arranged which
- calculates back the PRC data, which were calculated at a specific moment, with the assistance of the associated rate of change values (RRC data) to the moment of the last full minute, and,
- for each GPS satellite, inserts into a single RDS group of an RDS signal cycle the calculated-back PRC data together with the associated RRC data and an identification of the satellite concerned, but while abandoning a header provided in a standard format for GPS correction signals;
b) in a computer (110) arranged downstream of the RDS decoder (100) of the radio receiver (90), the calculated-back PRC data are extrapolated to the actual time for each GPS satellite with the assistance of the associated rate of change values (RRC data) and computer-internally generated time information (internal Z count), and
c) the non-transmitted header is reconstructed with check words and continuous time information in the computer (110) and, together with the extrapolated PRC data for each GPS satellite and the associated RRC data, is put together to form the standardized format of the correction data (7).

2. A system according to claim 1, **characterized in that**, after every insertion of the processed correction data (8) for a GPS satellite into an RDS signal cycle, the PRC data and RRC data are updated for all satellites.

3. A system according to claim 1 or 2, **characterized in that** the evaluating device (60) occasionally inserts a time information derived from the received GPS signals into a group of an RDS signal cycle, which time information is used by the computer (110) to synchronize the internally generated time information (internal Z count).

4. A system according to one of claims 1 to 3, **characterized in that** the evaluating device (60) occasionally inserts a data identification information (IOD) derived from the received GPS signals into a group of an RDS signal cycle, which data identification information is used by the computer (110) to reconstruct the standardized correction data (7).

5. A system according to one of claims 1 to 4, **characterized in that** the evaluating device (60) continuously determines for each GPS satellite the exact extent to which the rate of change last transmitted as RRC data corresponds with the actual rate of change value, and that the evaluating device (60) inserts the correction data for satellites with inferior matching of the actual rate of change on a priority basis compared to correction data for satellites with better matching of the rate of change into the RDS signal cycle for the purpose of a priority control.

6. A receiving arrangement for determining the position of mobile objects (5) with the assistance of position-finding and navigation satellites (GPS satellites) which continuously change their position relative to a stationary point on the earth and emit GPS signals that permit a GPS receiver (120) installed on the mobile object (5) to determine its instantaneous position and altitude coordinates, wherein the receiving arrangement is designed to receive correction data - comprised of pseudo range correction values (PRC data), valid for the moment of their calculation, as well as of values (RRC data) for the rate of change of the PRC data - wherein the correction data are emitted as data of a radio data system signal (RDS signal) inserted into a radio program signal, the receiving arrangement comprising
- an arrangement (90, 100) to continuously receive and decode the RDS signal provided with the correction data, and
- a computer (110) to separate the correction data from the decoded RDS signal and to feed the correction data into the GPS receiver (120) installed on the mobile object (5), which GPS receiver corrects its measurement results according to the separated correction data,
**characterized in that**, for the evaluation of processed correction data (8), wherein the PRC data calculated at a specific moment are calculated back to the moment of the last full minute with the assistance of the associated rate of change values (RRC data), the computer (110) is designed such that :
a) the calculated-back PRC data are extrapolated to the actual time for each GPS satellite with the assistance of the associated rate of change values (RRC data) and computer-internally generated time information (internal Z count), and
b) a non-transmitted header provided in a standardized format for correction data is reconstructed with check words and continuous time information and, together with the extrapolated PRC data for each GPS satellite and the associated RRC data, is put together to form the standardized format of the correction data.

7. A receiving arrangement according to claim 6, **characterized in that** a time information, which is inserted occasionally into a group of an RDS signal cycle and derived from the received GPS signals, is used by the computer (110) to synchronize the internally generated time information (internal Z count).

8. A receiving arrangement according to claim 6 or 7, **characterized in that** a data identification information (IOD), which is inserted occasionally into a group of an RDS signal cycle and derived from the received GPS signals, is used by the computer (110) to reconstruct the correction data (7) conforming to standard.

## Revendications

1. Système pour la détermination de position d'objets mobiles (5) à l'aide de satellites de repérage et de navigation (satellites GPS 1, 2, 3, 4), dont la position par rapport à un point terrestre stationnaire se modifie de façon continue et qui émettent des signaux GPS (11, 21, 31, 41) qui permettent à un récepteur GPS (120) installé dans l'objet mobile (5) de déterminer ses coordonnées instantanées de position momentanée, avec
- au moins une unité (50) de référence assurant les fonctions de réception GPS et de traitement, dont les coordonnées de position sont connues avec précision, qui fournit de façon continue des valeurs d'erreurs à partir des signaux GPS (12, 22, 32, 42) reçus de façon continue et des coordonnées de position connues de son emplacement (6), et qui, à partir de ces valeurs d'erreurs, forme des données de correction, ces données de correction (7) comprenant :
- des pseudo valeurs de correction de trajet (données PRC), qui sont valables pour l'instant de leurs calculs, ainsi que
- des valeurs (données RRC) pour la vitesse de changement instantanée des données PRC ;
- au moins un émetteur de radiodiffusion (80) avec un codeur RDS (70), qui émet les données de correction (7) formées en tant que données d'un signal RDS (Radio Data System) inséré dans son signal de programme ;
- un récepteur de radio diffusion (90) disponible dans l'objet mobile (5), avec un décodeur RDS (100) pour la réception et le décodage du signal RDS pourvu des données de correction (7), et
- un calculateur (100) pour séparer les données de correction (7) du signal RDS décodé et pour fournir les données de correction (7) au récepteur GPS installé dans l'objet mobile (5), ce calculateur corrigeant son résultat de mesure en fonction des valeurs de correction (7) séparées,
caractérisé en ce que
a) à l'unité (50) de réception GPS et de traitement est affecté un dispositif (60) d'évaluation qui
- recalcule pour l'instant de la dernière minute entière les données PRC calculées à un instant déterminé, à l'aide des valeurs correspondantes de vitesse de changement (données RRC), et
- pour chaque satellite GPS, les données PRC recalculées, ensemble avec les données RRC correspondantes et avec une identification du satellite concerné, sont introduites dans un seul groupe RDS d'un cycle de signal RDS, avec cependant suppression d'un en-tête prévu au format normalisé pour les signaux de correction GPS,
b) dans un calculateur (110) connecté au décodeur RDS (100) du récepteur (90) de radiodiffusion, on calcule au temps actuel les données PRC recalculées pour chaque satellite GPS à l'aide de la valeur de la vitesse de changement correspondante (données RRC) et d'informations de temps (Z-count interne) engendrées à l'intérieur du calculateur,
c) dans le calculateur (110), on reconstruit l'en-tête non transmis avec des mots de contrôle et des informations continues de temps et on l'assemble aux données PRC calculées au temps actuel pour chaque satellite GPS et aux données RRC correspondantes pour former les données de correction (7) au format normalisé.

2. Système selon la revendication 1, caractérisé en ce que, après chaque insertion des données de correction traitées (8) pour un satellite GPS dans un cycle de signal RDS, les données PRC et RRC sont actualisées pour tous les satellites.

3. Système selon la revendication 1 ou 2, caractérisé en ce que le dispositif d'évaluation (60) insère de façon occasionnelle, dans un groupe d'un cycle de signal RDS, une information de temps dérivée des signaux GPS reçus, cette information étant utilisée par le calculateur (110) pour synchroniser l'information de temps (Z-Count interne) générée de façon interne.

4. Système selon l'une des revendications 1 à 3, caractérisé en ce que le dispositif d'évaluation (60) insère de façon occasionnelle, dans un groupe d'un cycle de signal RDS, une information (IOD) d'identification de données dérivées de signaux GPS reçus, cette information étant utilisée par le calculateur (110) pour reconstruire les données de correction (7) normalisées.

5. Système selon l'une des revendications 1 à 4, caractérisé en ce que le dispositif d'évaluation (60) détermine de façon continue, pour chaque satellite GPS, la précision avec laquelle la vitesse de changement transmise en dernier lieu en tant que données RRC correspond à la valeur actuelle de vitesse de changement, et en ce que le dispositif d'évaluation (60) insère dans le cycle d'un signal RDS, sous la forme d'une commande de priorité, les données de correction pour les satellites avec une plus mauvaise correspondance de la vitesse de changement actuelle, préférentiellement aux données de correction pour des satellites avec une meilleure correspondance de la vitesse de changement.

6. Dispositif de réception pour la détermination de position d'objets mobiles (5) à l'aide de satellites de repérage et de navigation (satellites GPS) dont la position par rapport à un point terrestre stationnaire change de façon continue et émettent des signaux GPS qui permettent à un récepteur GPS (120) installé dans l'objet mobile (5) de déterminer ses coordonnées instantanées de repérage et d'altitude, dans lequel le dispositif de réception est agencé pour la réception de données de correction qui consistent en des pseudo valeurs de correction de trajet (données PRC), qui sont valables pour l'instant de leur calcul, ainsi qu'en des valeurs (données RRC) pour la vitesse de changement des données PRC, les données de correction étant émises en tant que données d'un signal RDS inséré dans un signal de programme de radiodiffusion, avec
- un dispositif (90, 100) pour la réception et le décodage continus du signal RDS pourvu des données de corrections, et
- un calculateur (110) pour séparer les données de correction du signal RDS et pour fournir les données de correction à un récepteur GPS (120) installé dans l'objet mobile (5) qui corrige son résultat de mesure en fonction des données de corrections séparées,
caractérisé en ce que, pour l'évaluation de données (8) de correction traitées, pour lesquelles on recalcule à l'instant de la dernière minute entière, à l'aide des valeurs de vitesse de changement correspondantes (données RRC), les données RRC calculées à un instant déterminé, le calculateur (110) est réalisé de façon telle que
a) les données PRC recalculées pour chaque satellite GPS à l'aide des valeurs de vitesse de changement correspondantes (données RRC) et des informations de temps générées par calcul interne (Z-Count interne), sont calculées au temps actuel, et
b) un en-tête non transmis prévu dans un format normalisé pour les données de correction est reconstruit avec des mots de contrôle et des informations continues de temps et est assemblé aux données PRC calculées de façon précise pour chaque satellite GPS et aux données RRC correspondantes, pour former des données de correction au format normalisé.

7. Dispositif de réception selon la revendication 6, caractérisé en ce que le calculateur (110) utilise, pour la synchronisation de l'information temporelle générée de façon interne (Z-Count interne), une information temporelle insérée occasionnellement dans un groupe d'un cycle de signal RDS et dérivée des signaux GPS reçus.

8. Dispositif de réception selon la revendication 6 ou 7, caractérisé en ce que le calculateur utilise, pour la reconstruction des données de correction (7) conformes à la norme, une information (IOD) d'identification de données insérée de façon occasionnelle dans un groupe d'un cycle de signal RDS et dérivée des signaux GPS reçus.
